# FASCICULE DE BREVET EUROPEEN

(11) **EP 1 742 236 B1**
(45) Date de publication et mention de la délivrance du brevet: **22.07.2009**
(21) Numéro de dépôt: 06354019.9
(22) Date de dépôt: 23.06.2006
(51) Int. Cl.: H01G 2/02

(54) **Dispositif de maintien pour support de condensateurs et support comportant un tel dispositif**
Haltevorrichtung für Halterung für Kondensatoren und Halterung mit einer solchen Haltevorrichtung
Holding device for support of capacitors and support provided with such a device

(30) Priorité: 08.07.2005 FR 0507317
(43) Date de publication de la demande: 10.01.2007
(73) Titulaire: MGE UPS Systems, 38334 Saint-Ismier Cedex (FR)
(72) Inventeur: Giroud-Suisse, Daniel, 38050 Grenoble Cédex 09 (FR); Locatelli, Robert, 38050 Grenoble Cédex 09 (FR)
(74) Mandataire: Tripodi, Paul

(56) Documents cités:
- EP-A- 0 033 697
- US-B1- 6 244 544
- PATENT ABSTRACTS OF JAPAN vol. 014, no. 005 (E-869), 9 janvier 1990 (1990-01-09) & JP 01 253219 A (MITSUBISHI ELECTRIC CORP), 9 octobre 1989 (1989-10-09)

## Description

### DOMAINE TECHNIQUE DE L'INVENTION

Le domaine de l'invention est la mise en oeuvre de condensateurs de puissance, et plus particulièrement le domaine des équipements électriques présentant des supports pour des condensateurs déformables, tels que des condensateurs de puissance en film de polypropylène métallisé équipés d'un système anti-explosion qui ont la particularité de s'étendre le long de leur axe principal en réponse à une défaillance.

L'invention concerne un dispositif de maintien pour support d'au moins un condensateur doté de bornes de contact électriques, ledit dispositif comprenant un châssis. L'invention concerne également un support comportant un tel dispositif de maintien.

### ETAT DE LA TECHNIQUE

Les condensateurs dotés d'un système anti-explosion sont généralement conçus pour s'allonger d'environ 15 millimètres en cas de défaut intrinsèque, ce qui permet de déconnecter leur fusible interne et de prévenir toute défaillance, telle que, par exemple, un départ d'incendie. La mise en oeuvre de tels condensateurs est difficile à cause de l'impact de leur déformation sur les connexions électriques et sur la tenue mécanique.

Le document JP-A-01253219 décrit un système rigide de fixation pour condensateurs.

La mise en oeuvre d'un support permettant un maintien mécanique des condensateurs dans un circuit électrique est connue de l'homme de métier. La mise en oeuvre d'un support permettant, en outre, un montage en parallèle de plusieurs condensateurs est également connue. Souvent, la fonction de maintien des condensateurs est en partie réalisée par des moyens permettant, de surcroît, la connexion électrique des bornes de contact électrique.

Ainsi, il est connu de connecter les bornes de condensateurs par des barres de cuivre rigides, ce qui permet d'assurer à la fois le maintien mécanique des condensateurs et le passage de forts courants. Les moyens de maintien que constituent les barres de cuivre sont généralement complémentés par un dispositif de maintien, telle qu'une tôle rigide sur laquelle les extrémités des condensateurs dépourvues de borne sont fixées par une liaison rigide. Cependant, un tel support de condensateurs n'autorise aucune tolérance sur les dimensions des condensateurs, et ne permet donc pas l'utilisation de condensateurs déformables.

L'utilisation de condensateurs déformables dans un tel support de condensateurs pourrait être envisagée si la barre de cuivre rigide est remplacée par des câbles souples, par exemple des tresses électriques. Ces câbles souples permettraient d'assurer un contact électrique permanent aux bornes des condensateurs n'entravant pas la déformation desdits condensateurs. Cependant, la mise en oeuvre de tresses électriques est onéreuse et ne permet pas le passage d'un courant élevé.

Il est également connu d'utiliser un support de condensateurs comprenant des premiers moyens de maintien rigides, telles que des barres de cuivre fixées sur les bornes des condensateurs, ainsi qu'un dispositif de maintien comportant des colliers coulissants autorisant une déformation longitudinale des condensateurs. Un tel dispositif de maintien est généralement compliqué à mettre en oeuvre, en particulier en ce qui concerne le serrage du dispositif sur les parois latérales des condensateurs. De surcroît, la mise en oeuvre de ce type de dispositif de maintien entrave la dissipation thermique sur les parois latérales de ces condensateurs.

### EXPOSE DE L'INVENTION

L'invention a pour objet d'éliminer et/ou de limiter les inconvénients décrits ci-dessus.

Selon l'invention, ces objectifs sont atteints grâce à un dispositif de maintien pour support d'au moins un condensateur doté de bornes de contact électriques, ledit dispositif comprenant un châssis, au moins un capot pour le au moins un condensateur destiné à coopérer avec une extrémité dudit condensateur, et au moins une bande de liaison déformable reliant ledit capot au châssis.

Le châssis d'un tel dispositif comporte, de préférence, des bords de rigidité.

De préférence, le au moins un capot et la au moins une bande de liaison sont conformés dans une plaque perforée. La plaque perforée peut être avantageusement en acier galvanisé. Les bords de rigidité du châssis sont avantageusement obtenus par pliage de bords latéraux de la plaque perforée.

Selon un mode préféré de l'invention, la plaque perforée comporte, pour le au moins un capot, au moins une ouverture, ladite ouverture étant dotée d'une fente principale et de deux parties latérales reliées aux extrémités de ladite fente principale,
- le contour dudit capot étant délimité par des bords intérieurs d'un groupe d'au moins une fente principale de la au moins une ouverture, et
- la au moins une bande de liaison étant définie par des bords en vis-à-vis de deux parties latérales connexes.

La plaque perforée comporte avantageusement, pour le au moins un capot, au moins trois ouvertures, ce qui permet d'assurer une bonne tenue mécanique.

Selon un mode de réalisation, les bords en vis-à-vis de parties latérales connexes forment une bande de liaison dépliante présentant une composante perpendiculaire au contour du capot à l'extérieur dudit contour.

Dans ce mode de réalisation, la bande de liaison est, de préférence, reliée au capot et au châssis par des jointures déformables.

Selon un autre mode de réalisation, les bords en vis-à-vis de parties latérales connexes sont substantiellement tangentiels au contour du capot, et chaque ouverture comporte une partie latérale extérieure par rapport au contour du capot et une partie latérale intérieure ou disposée sur ledit contour.

De préférence, le au moins un condensateur présente une extrémité comportant les bornes de contact électrique et une autre extrémité dotée d'une vis de fixation, le au moins un capot comportant un orifice destiné à recevoir la vis de fixation.

L'invention concerne, en outre, un support d'au moins un condensateur doté de bornes de contact électrique, comprenant le dispositif de maintien décrit précédemment, et des moyens de maintien rigides, les moyens de maintien coopérant avec le dispositif de maintien de sorte que, lors de la déformation d'un condensateur, ledit condensateur fait pression sur le capot du dispositif de maintien, par contre réaction avec les moyens de maintien rigide, et déforme la ou les bande(s) de liaison reliant le capot au châssis dudit dispositif de maintien.

De préférence, les moyens de maintien sont également des moyens de contact électrique destinés à être montés sur les bornes de contact électrique du condensateur.

A titre d'exemple, les moyens de maintien comportent deux barres métalliques coopérant avec les bornes de contact des condensateurs.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente une vue de profil du support selon l'invention dans laquelle seulement deux condensateurs sont représentés, l'un à l'état normal, et l'autre à l'état déformé.

La figure 2 représente un mode de réalisation du dispositif de maintien selon l'invention conformé dans une plaque perforée comportant: un châssis, un capot pour chaque condensateur et quatre bandes de liaison associées à chaque capot.

La figure 3 représente un autre mode de réalisation du dispositif de maintien selon l'invention conformé dans une plaque découpée.

La figure 4 représente encore un autre mode de réalisation du dispositif de maintien selon l'invention conformé dans une plaque découpée.

### DESCRIPTION DETAILLEE

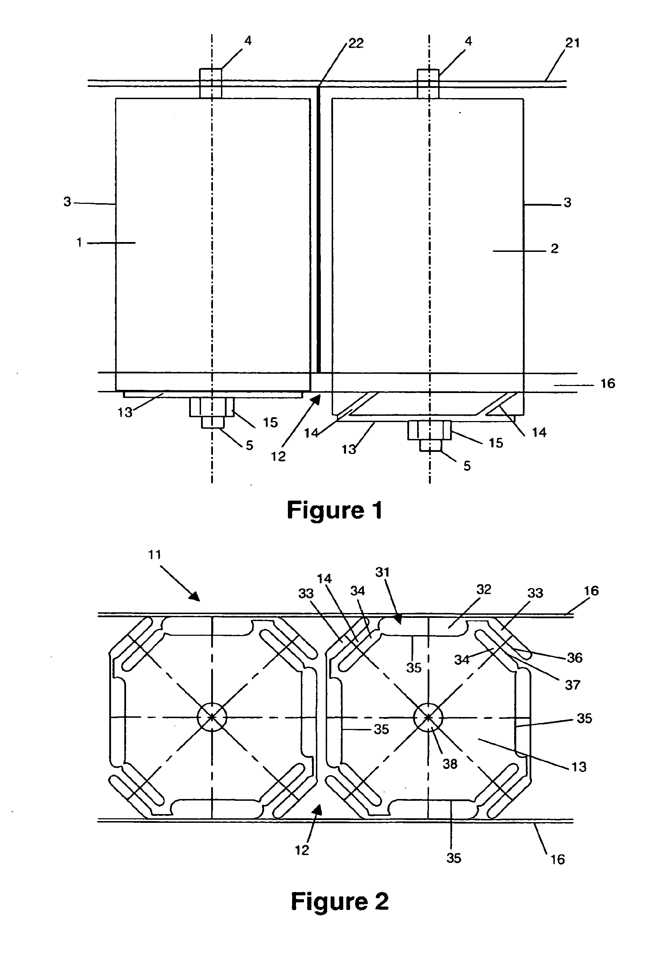

Le support de la figure 1 est représenté avec deux condensateurs montés en parallèle. Un premier condensateur 1 est représenté à l'état normal de fonctionnement, c'est à dire sans déformation. Un deuxième condensateur 2 est représenté à l'état déformé. Chaque condensateur comporte une partie cylindrique 3 dissipant généralement une certaine quantité de chaleur, et à l'une de ses extrémités, deux bornes 4 permettant d'établir un contact électrique avec le circuit électrique dans lequel ils sont utilisés. Les condensateurs 1 et 2 sont dotés également d'une vis de fixation 5 à leurs extrémités dépourvues de borne de contact.

Le support comprend un dispositif de maintien 11, ce dernier étant représenté de manière plus détaillée à la figure 2. Le dispositif de maintien 11 comporte un châssis 12 doté de deux bords de rigidité 16. Le dispositif de maintien comporte également un capot 13 pour chaque condensateur ainsi que des bandes de liaison 14 reliant le châssis à chaque capot. Les capots 13 comportent des orifices 38 destinés à recevoir les vis de fixation 5 des condensateurs. Des boulons 15 permettent de fixer les extrémités des condensateurs 1 et 2 aux capots 13. Les bandes de liaison 14 sur le côté droit du support comportant le condensateur déformé 2, apparaissent à l'état déformé. Du côté du condensateur 1 non déformé, les bandes de liaison non déformées sont dans un même plan que le capot 13.

Le support comprend, en outre, des moyens de maintien rigides 21 qui sont également des moyens de contact électrique destinés à coopérer avec les bornes de contact 4 du condensateur. Les moyens de maintien rigide 21 sont essentiellement constitués, en l'occurrence, par des barres métalliques montées sur les bornes de contact 5 des condensateurs 1 et 2.

Les moyens de maintien 21 coopèrent avec le dispositif de maintien 11 de sorte que, lors de la déformation d'un condensateur, ledit condensateur fait pression sur le capot du dispositif de maintien, par contre réaction avec les moyens de maintien rigide, et déforme les bandes de liaison 14 dudit dispositif de maintien. Dans le cas représenté à la figure 1, les moyens de maintien 21 et le dispositif de maintien 11 sont reliés de manière rigide par des moyens de liaison 22. La liaison rigide entre les moyens de maintien et le dispositif de maintien peut être réalisée par un bâti, non représenté, sur lequel le support est monté. Notons que dans le support de la figure 1, la présence du condensateur 1, non déformé, suffit pour constituer un moyen de liaison assurant la rigidité entre les moyens de maintien 21 et le dispositif de maintien 11.

Le dispositif de maintien représenté à la figure 2 est conformé dans une plaque perforée. Par plaque perforée on entend toute plaque comportant des ouvertures obtenues par tout moyen connu de l'homme du métier, tel que par perforation, par découpage ou par poinçonnage, par exemple par fraisage ou perçage ou par découpage à l'aide d'un rayon laser. Dans le cas représenté à la figure 2, la plaque perforée peut être obtenue par fraisage ou perçage.

Le dispositif de maintien 11 représenté à la figure 2 comporte un châssis 12 conformé dans la plaque et doté de deux bords de rigidité 16 représentée de profil. Les bords de rigidité 16 sont destinés à rigidifier le châssis. Dans le mode représenté à la figure 2, les bords de rigidité 16 sont obtenus par pliage des bords latéraux de la plaque. Le dispositif de maintien 11 comporte, en outre, un capot 13 pour chaque condensateur et quatre bandes de liaison 14 associées à chaque capot.

La plaque perforée représentée à la figure 2 comprend, pour chaque capot, quatre ouvertures 31 comportant une fente principale 32 et deux parties latérales 33 et 34 reliées aux extrémités de ladite fente principale. Le contour de chaque capot est délimité par les bords intérieurs 35 des fentes principales. Chaque bande de liaison est définie par des bords 36 et 37 en vis-à-vis de deux parties latérales 33 et 34 connexes, lesdits bords étant substantiellement tangentiels au contour du capot. De surcroît, chaque ouverture comporte une partie latérale extérieure 33 par rapport au contour du capot et une partie 34 latérale intérieure ou disposée sur ledit contour.

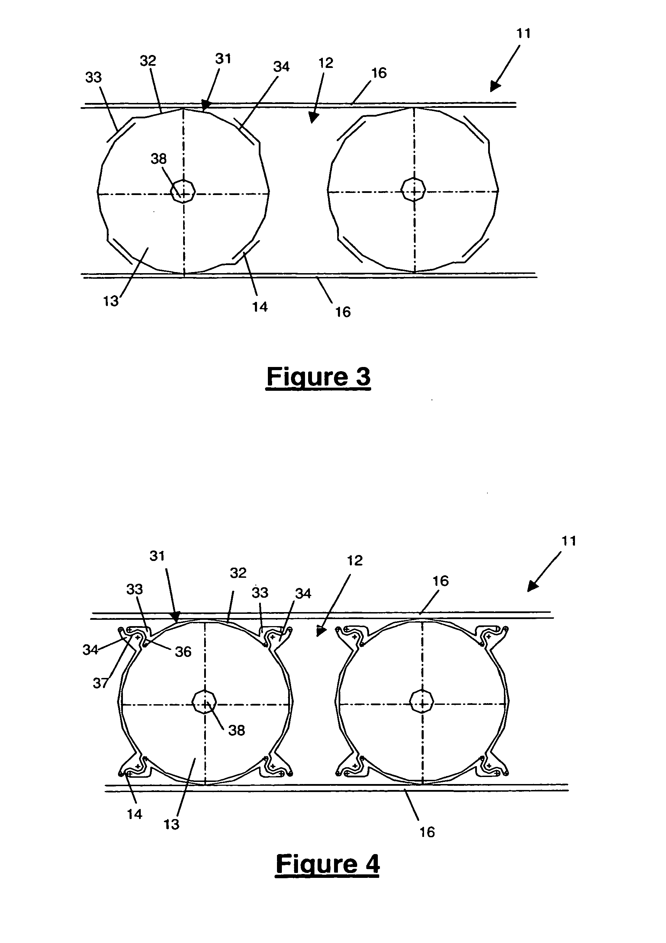

Lorsqu'un condensateur subit une déformation de long de son axe longitudinal, chaque bande de liaison est étirée dans la direction de cet axe de sorte que le capot des dispositifs des figures 2 ou 3, sur lequel le condensateur est fixé, se déplace en translation le long de cet axe et en rotation autour de ce même axe. Toutefois le déplacement en rotation du capot est très léger, de l'ordre de quelques degrés. Pour un tel montage, il est nécessaire de prévoir des couplages autorisant une telle rotation entre le condensateur et les moyens de maintien que constituent les barres de cuivres 21, d'une part, et le dispositif de maintien 11, d'autre part.

Le dispositif de maintien 11 représenté à la figure 3 peut être obtenu par découpage et comporte la plupart des éléments de celui représenté à la figure 2. Par rapport à la figure 2, les bords intérieurs des fentes principales délimitant le contour du capot épousent de plus près la circonférence des condensateurs.

Les bandes de liaison des dispositifs de maintien représentées dans les figures 1, 2 et 3 sont déformables au moins au niveau des jointures les reliant au capot et au châssis.

Le dispositif de maintien représenté à la figure 4 comporte un certain nombre d'éléments déjà représentés à la figure 2 et 3. Contrairement aux dispositifs des figures 2 et 3, les bords en vis-à-vis de parties latérales connexes ne sont pas tangentiels au contour du capot, mais forment une bande de liaison dépliante présentant une composante perpendiculaire au contour du capot à l'extérieur dudit contour.

Par bande de liaison dépliante, on entend une bande de liaison non linéaire, c'est à dire présentant plusieurs segments ou des parties courbes destinés à être dépliés lorsque le condensateur fait pression sur le capot. Dans ce cas, les bandes de liaison sont déformables au moins au niveau des jointures entre les segments ou au niveau des parties courbes.

Lorsqu'un condensateur subit une déformation de long de son axe longitudinal, chaque bande de liaison est étirée dans la direction de cet axe. Le capot sur lequel le condensateur est fixé subit une translation le long de l'axe longitudinal du condensateur, mais ne subit aucune rotation sensible autour de cet axe.

Les plaques dans lesquelles sont conformés les dispositifs de maintien représentés aux figures 2, 3 et 4 sont suffisamment rigides pour assurer une bonne tenue mécanique du support et suffisamment déformables pour permettre la déformation des bandes de liaison. L'homme du métier peut choisir la matière et l'épaisseur de la plaque de façon à satisfaire un compromis entre la rigidité et la résilience. A titre d'exemple, la plaque peut être en acier galvanisé et peut présenter une épaisseur de l'ordre du millimètre.

Un avantage du dispositif de maintien selon l'invention et du support comportant un tel dispositif est de permettre l'utilisation de condensateurs susceptibles de se déformer tout en assurant une bonne tenue mécanique desdits condensateurs dans le circuit électrique et n'entravant pas leurs dissipations thermiques.

## Revendications

1. Dispositif de maintien (11) pour support d'au moins un condensateur (1, 2) doté de bornes de contact électriques (4), ledit dispositif comprenant un châssis (12), le dispositif étant **caractérisé en ce qu'**il comporte :
- au moins un capot (13) pour le au moins un condensateur destiné à coopérer avec une extrémité dudit condensateur, et
- au moins une bande de liaison (14) déformable reliant ledit capot au châssis.

2. Dispositif selon la revendication 1, **caractérisé en ce que** le châssis comporte des bords de rigidité (16).

3. Dispositif selon l'une des revendications 1 ou 2, **caractérisé en ce que** le au moins un capot (13) et la au moins une bande de liaison (14) sont conformés dans une plaque perforée.

4. Dispositif selon la revendication 3, **caractérisé en ce que** les bords de rigidité (16) du châssis (12) sont obtenus par pliage de bords latéraux de la plaque perforée.

5. Dispositif selon l'une des revendications 3 ou 4, **caractérisé en ce que** la plaque perforée est en acier galvanisé.

6. Dispositif selon l'une des revendications 3 à 5, **caractérisé en ce que** la plaque perforée comporte, pour le au moins un capot, au moins une ouverture (31), ladite ouverture étant dotée d'une fente principale (32) et de deux parties latérales (33, 34) reliées aux extrémités de ladite fente principale,
- le contour dudit capot (13) étant délimité par des bords intérieurs (35) d'un groupe d'au moins une fente principale de la au moins une ouverture, et
- la au moins une bande de liaison (14) étant définie par des bords en vis-à-vis (36, 37) de deux parties latérales connexes.

7. Dispositif selon la revendication 6, **caractérisé en ce que** la plaque perforée comporte, pour le au moins un capot, au moins 3 ouvertures (31).

8. Dispositif selon l'une des revendications 6 ou 7, **caractérisé en ce que** les bords en vis-à-vis (36, 37) de parties latérales connexes (33, 34) forment une bande de liaison (14) dépliante présentant une composante perpendiculaire au contour du capot (13) à l'extérieur dudit contour.

9. Dispositif selon la revendication 8, **caractérisé en ce que** ladite bande de liaison (14) est reliée au capot (13) et au châssis (12) par des jointures déformables.

10. Dispositif selon l'une des revendications 6 ou 7, **caractérisé en ce que** les bords en vis-à-vis (36, 37) de parties latérales connexes (33, 34) sont substantiellement tangentiels au contour du capot (13), et **en ce que** chaque ouverture (31) comporte une partie latérale extérieure (33) par rapport au contour du capot et une partie latérale (34) intérieure ou disposée sur ledit contour.

11. Dispositif selon l'une des revendications 1 à 10, **caractérisé** le au moins un condensateur présente une extrémité comportant les bornes de contact électrique et une autre extrémité dotée d'une vis de fixation, le au moins un capot (13) comportant un orifice (38) destiné à recevoir la vis de fixation (5).

12. Support d'au moins un condensateur (1, 2) doté de bornes de contact électrique (4), **caractérisé en ce qu'**il comprend un dispositif de maintien (11) selon l'une des revendications 1 à 11, et des moyens de maintien rigides (21), lesdits moyens de maintien coopérant avec le dispositif de maintien de sorte que, lors de la déformation d'un condensateur (2), ledit condensateur fait pression sur le capot (13) du dispositif de maintien, par contre réaction avec les moyens de maintien rigide (21), et déforme la ou les bande(s) de liaison (14) reliant le capot (13) au châssis (12) dudit dispositif de maintien.

13. Support selon la revendication 12, **caractérisé en ce que** les moyens de maintien (21) sont également des moyens de contact électrique destinés à être montés sur les bornes (4) de contact électrique du condensateur (1,2).

14. Support selon la revendication 13, **caractérisé en ce que** les moyens de maintien (21) comportent deux barres métalliques coopérant avec les bornes de contact (4) des condensateurs (1,2).

## Claims

1. A support device (11) for supporting at least one capacitor (1, 2) provided with electric contact terminals (4), said device comprising a frame (12), the device being **characterized in that** it comprises:
- at least one cover (13) for the at least one capacitor designed to operate in conjunction with one end of said capacitor and,
- at least one deformable joining strip (14) joining said cover to the frame.

2. The device according to claim 1, **characterized in that** the frame comprises strengthening edges (16).

3. The device according to one of claims 1 or 2, **characterized in that** the at least one cover (13) and the at least one joining strip (14) are shaped from a perforated plate.

4. The device according to claim 3, **characterized in that** the strengthening edges (16) of the frame (12) are obtained by folding lateral edges of the perforated plate.

5. The device according to one of claims 3 or 4, **characterized in that** the perforated plate is made from galvanized steel.

6. The device according to one of claims 3 to 5, **characterized in that** the perforated plate comprises at least one opening, (31) for the at least one cover, said opening being provided with a main slit (32) and with two lateral parts (33, 34) joined to the ends of the main slit,
- the outline of said cover (13) being delineated by inner edges (35) of a group of at least one main slit of the at least one opening and,
- the at least one joining strip (14) being defined by the facing edges (36, 37) of two connected lateral parts.

7. The device according to claim 6, **characterized in that** the perforated plate comprises at least three openings (31) for the at least one cover.

8. The device according to one of claims 6 or 7, **characterized in that** the facing edges (36, 37) of connected lateral parts (33, 34) form a fold-out joining strip (14) presenting a component perpendicular to the outline of the cover (13) outside said outline.

9. The device according to claim 8, **characterized in that** said joining strip (14) is joined to the cover (13) and to the frame (12) by deformable joins.

10. The device according to one of claims 6 or 7, **characterized in that** the facing edges (36, 37) of connected lateral parts (33, 34) are substantially tangential to the outline of the cover (13), and that each opening (31) comprises a lateral part (33) that is external with respect to the outline of the cover and a lateral part (34) that is internal or arranged on said outline.

11. The device according to one of claims 1 to 10, **characterized in that** the at least one capacitor presents one end comprising the electric contact terminals and another end provided with a securing screw, the at least one cover (13) comprising a hole (38) designed to receive the securing screw (5).

12. A support for at least one capacitor (1, 2) provided with electric contact terminals (4), **characterized in that** it comprises a support device (11) according to one of claims 1 to 11, and rigid support means (21), said support means operating in conjunction with the support device in such a way that, when deformation of a capacitor (2) takes place, said capacitor exerts a pressure on the cover (13) of the support device, by counter-reaction with the rigid support means (21), and deforms the joining strip(s) (14) joining the cover (13) to the frame (12) of said support device.

13. The support according to claim 12, **characterized in that** the support means (21) are also electric contact means designed to be fitted on the electric contact terminals (4) of the capacitor (1, 2).

14. The support according to claim 13, **characterized in that** the support means (21) comprise two metal bars operating in conjunction with the contact terminals (4) of the capacitor (1,2).

## Patentansprüche

1. Haltevorrichtung (11) für einen Träger mindestens eines mit elektrischen Anschlussklemmen (4) versehenen Kondensators (1, 2), welche Vorrichtung ein Chassis (12) umfasst und **dadurch gekennzeichnet ist, dass** sie
- mindestens einen Auflageboden (13) für den mindestens einen Kondensator umfasst, welcher Boden dazu dient, mit einem Ende des genannten Kondensators zusammenzuwirken,
- und mindestens einen verformbaren Verbindungssteg (14) umfasst, der den genannten Auflageboden mit dem Chassis verbindet.

2. Vorrichtung nach Anspruch 1, **dadurch gekennzeichnet dass** das Chassis biegesteife Ränder (16) umfasst.

3. Vorrichtung nach einem der Ansprüche 1 oder 2, **dadurch gekennzeichnet, dass** der mindestens eine Auflageboden (13) und der mindestens eine Verbindungssteg (14) in einer Lochplatte ausgebildet sind.

4. Vorrichtung nach Anspruch 3, **dadurch gekennzeichnet, dass** die biegesteifen Ränder (16) des Chassis (12) durch Umkanten der Seitenränder der Lochplatte hergestellt werden.

5. Vorrichtung nach irgendeinem der Ansprüche 3 oder 4, **dadurch gekennzeichnet, dass** die Lochplatte aus verzinktem Stahlblech besteht.

6. Vorrichtung nach einem der Ansprüche 3 bis 5, **dadurch gekennzeichnet, dass** in der Lochplatte zur Bildung des mindestens einen Auflagebodens mindestens eine Öffnung (31) ausgebildet ist, welche Öffnung einen Hauptschlitz (32) sowie zwei Seitenabschnitte umfasst (33, 34), die sich an die Enden des genannten Hauptschlitzes anschließen sind, wobei
- die Umrisslinie des genannten Auflageboden (13) durch die Innenränder (35) einer Anordnung aus mindestens einem Hauptschlitz der mindestens einen Öffnung begrenzt wird und
- der mindestens eine Verbindungssteg (14) durch einander gegenüberliegende Ränder (36,37) von zwei zusammengehörigen Seitenabschnitten bestimmt wird.

7. Vorrichtung nach Anspruch 6, **dadurch gekennzeichnet, dass** in der Lochplatte zur Bildung des mindestens einen Auflagebodens mindestens drei Öffnungen (31) ausgebildet sind.

8. Vorrichtung nach irgendeinem der Ansprüche 6 oder 7, **dadurch gekennzeichnet, dass** die einander gegenüberliegenden Ränder (36, 37) von zusammengehörigen Seitenabschnitten (33, 34) einen abknickbaren Verbindungssteg (14) bilden, der eine rechtwinklig zur Umrisslinie des Auflagebodens (13) gerichtete, außerhalb dieser Umrisslinie liegende Komponente umfasst.

9. Vorrichtung nach Anspruch 8, **dadurch gekennzeichnet, dass** der genannte Verbindungssteg (14) über verformbare Übergänge mit dem Auflageboden (13) und dem Chassis (12) verbunden ist.

10. Vorrichtung nach einem der Ansprüche 6 oder 7, **dadurch gekennzeichnet, dass** die einander gegenüberliegenden Ränder (36, 37) von zusammengehörigen Seitenabschnitten (33,34) im wesentlichen tangential zur Umrisslinie des Auflagebodens (13) verlaufen und dass jede Öffnung (31) einen in Bezug zur Umrisslinie des Auflagebodens äußeren Seitenabschnitt (33) sowie einen an der genannten Umrisslinie liegenden inneren Seitenabschnitt (34) umfasst.

11. Vorrichtung nach einem der Ansprüche 1 bis 10, **dadurch gekennzeichnet, dass** der mindestens eine Kondensator ein Ende mit elektrischen Anschlussklemmen sowie ein zweites Ende mit einer Befestigungsschraube umfasst, wobei in dem mindestens einen Auflageboden (13) eine Öffnung (38) zur Durchführung der Befestigungsschraube (5) ausgebildet ist.

12. Träger für mindestens einen mit elektrischen Anschlussklemmen (4) versehenen Kondensator (1, 2), **dadurch gekennzeichnet, dass** er eine Haltevorrichtung (11) nach einem der Ansprüche 1 bis 11 sowie biegesteife Haltemittel (21) umfasst, welche Haltemittel mit der Haltevorrichtung derart zusammenwirken, dass bei einer Verformung des Kondensators (2) dieser durch Abstützung an den biegesteifen Haltemitteln (21) eine Druckkraft auf den Auflageboden (13) der Haltevorrichtung ausübt und dadurch den bzw. die Verbindungsstege (14) verformt, welche die Auflageboden (13) mit dem Chassis (12) der genannten Haltevorrichtung verbinden.

13. Träger nach Anspruch 12, **dadurch gekennzeichnet, dass** die Haltemittel (21) gleichzeitig als elektrische Kontaktmittel ausgebildet sind, die dazu dienen, an den elektrischen Anschlussklemmen des Kondensators (1, 2) befestigt zu werden.

14. Träger nach Anspruch 13, **dadurch gekennzeichnet, dass** die Haltemittel (21) zwei Metallschienen umfassen, die mit den Anschlussklemmen der Kondensatoren (1, 2) zusammenwirken.
